# EUROPEAN PATENT SPECIFICATION

(11) **EP 0 523 790 B1**
(45) Date of publication and mention of the grant of the patent: **01.10.1997**
(21) Application number: 92202098.7
(22) Date of filing: 10.07.1992
(51) Int. Cl.: C08K 3/00, C08L 25/04, C08L 71/12

(54) **Flame-retardant thermoplastic composition**
Flammgeschützte thermoplastische Zusammensetzung
Composition thermoplastique retardatrice de flamme

(30) Priority: 15.07.1991 IT MI911951
(43) Date of publication of application: 20.01.1993
(73) Proprietor: ENICHEM S.p.A., 20124 Milano (IT)
(72) Inventor: Mori, Francesco, I-37100 Verona (IT); Fasulo, Gian Claudio, I-46010 San Silvestro(MANTOVA) (IT); Nocci, Roberto, I-46030 Virgilio (MANTOVA) (IT); Fornasari, Vilma, I-42016 Guastalla (Reggio Emilia) (IT); Borghi, Italo, I-44100 Ferrara (IT)
(74) Representative: Fusina, Gerolamo

(56) References cited:
- US-A- 3 663 654
- US-A- 4 684 682
- DATABASE WPIL Derwent Publications Ltd., London, GB; AN 89-057350
- DATABASE WPIL, Derwent Publications Ltd., London (GB); AN 86-301617 [46]
- DATABASE WPIL, Derwent Publications Ltd., London (GB); AN 73-74656U [49]

## Description

The present invention relates to a flame-retardant thermoplastic composition.

More specifically, the present invention relates to a flame-retardant thermoplastic composition, based on styrene polymers, having excellent flow properties, satisfactory stability to processing and without the formation of toxic combustion products.

Styrene polymers and their use are well-known in the art, with reference, for example, to Polystyrene - W.C. Teach and G.C. Kiessling (Reinhold Plastics Applicatins Series), Reinhold Publ.. Corp. New York, 1960 and Modern Plastics Encyclopedia 1972 - 1973 Vol. 49: No. 10A, October 1972 pages 97-99, and 271-272.

It is also well-known that styrene polymers, like many other synthetic resins, burn very easily and spread fire. This disadvantage enormously limits the fields of application of styrene polymers.

In order to reduce or inhibit the flammability of these polymers it is common practice to incorporate certain additives generally known as flame-retardant agents into the polymer.

In the presence of these agents combustion is delayed or even entirely inhibited by different mechanisms of action. Flame-retardants which act chemically, interfering with the radicalic reactions of the combustion process, are very often used.

The halogenated derivatives of organic compounds, such as chloroparaffins, hexa-halo-benzenes, pentabromodiphenyl, pentabromodiphenyl-ether, decabromo-diphenyl-oxide or octabromodiphenyl are widely used for this purpose.

These halogenated derivatives are generally used in relatively high quantities to obtain significant flame-resistant effects. It is also known that the effectiveness of these halogenated derivatives can be increased by the addition of suitable synergetic inorganic compounds such as, for example, compounds of antimony, arsenic, bismuth, boron or zinc.

One of the drawbacks however of these flame-resistant agents or combination of compounds is that they very often negatively alter some of the properties of the polymer. In fact, a considerable decrease in the impact strength, elongation to break and aging resistance as well as in the processability and operating stability, can be observed in polymers to which these flame-resistant agents have been added.

Moreover some of these flame-retardants develop toxic substances during the processing and/or combustion, as described in CHEMOSPHERE - Vol.15 N.5 pages 649-652, 1989 and Vol. 18 - N. 1-6 pages 1235-1242, 1989.

To prevent the toxicity of halogenated products and/or synergetic inorganic compounds, the use of flame-resistant agents without halogens has been proposed. German Patent 3920995, for example, describes a flame-retardant thermoplastic composition without halogen including:
- from 30 to 90% by weight of at least one styrene copolymer, and, in relation to this,
- from 70 to 10% by weight of a flame-resistant agent composed of cellulose particles of starch and/or of sawdust coated with 30-300% by weight, with respect to their weight, of melamine phosphate.

In the examples of this Patent the flame-resistant agent is present in quantities of 30 to 50% by weight.

Compositions having such high quantities of flame-resistant agent are not of particular industrial interest because of their limited mechanical and rheological properties. In addition, the flame-resistant properties of these compositions are not entirely satisfactory.

It is also known that the flame-resistant properties of styrene polymers containing non-halogenated flame-resistant additives can be improved by adding a compatible polymer containing oxygen, such as a poly(phenylene ether) (PPE). There is extensive literature on the subject; for example, German Patent Application 3.019.617 describes flame-retardant compositions based on an impact resistant styrene polymer containing from 50 to 60% by weight of PPE and phosphorated compounds. European Patent Application 311909 describes thermoplastic compositions composed of an impact resistant styrene polymer and a PPE, made self-extinguishing by the addition of triphenylphosphinoxide and melamine or triphenylphosphinoxide and triphenylphosphate.

US-A-3,663,654 discloses a flame-retardant composition of poly(phenylene ether), a styrene polymer and 0.1 to 5 % by weight of red phosphorous. US-A-4,684,682 discloses a similar prior art in which the styrene polymer is an A-B-A styrene conjugated diene block copolymer, whereby the composition further comprises triphenyl phosphate as plasticizer and flame-retardant.

The ammonium phosphates are known flame-retardant for compositions of PPE and styrene polymers (WPIL/Derwent N 89-057350 & JP-A-01009265), while mixtures of ammonium phosphate and red phosphorous are known to confer flame-retardant properties to polymer compositions based on polyolefins or polyoxymethylene (JP-A-61223045 and JP-B-55035421)

Because of the high cost of some of these additives, the compositions described are of little industrial interest. Moreover, the known compositions containing flame-resistant agents without halogen, drip during the flame test.

The flame extinction mechanism is taken into consideration in the flammability classification of polymers according to the standard regulations. Most commonly used is the extremely strict, vertical UL-94 test (developed by Underwriters' Laboratories, USA). Acccording to this test, materials which are extinguished by the dripping of the burning molten matter are classified under category V-2, in the case of the burning of surgical cotton caused by burning drops. Plastic materials classified as V-2 are not suitable for certain applications, for example when the burning drops can cause public damage.

The Applicant has now found that the flame-resistant properties of compositions based on styrene polymers containing poly(phenylene)ether, as a co-agent in the flame-resistant action, can be increased, without the above-mentioned disadvantages, by using a synergetic mixture including (i) red phosphorous and (ii) an inorganic compound containing phosphorous and nitrogen.

The present invention consequently relates to a flame-resistant composition including:
A) a styrene polymer;
B) a poly(phenylene ether);
C) a sufficient quantity ranging from 5 to 20 parts by weight with respect to 100 parts of the mixture A) and B), of a synergic mixture including i) red phosphorous and ii) an inorganic compound selected from an ammonium polyphosphate of formula

   (NH₄)ₙ₊₂ Pₙ O₃ₙ₊₁ (IV)

   wherein n is an integer equal or higher than 2, or an ammonium polyphosphate having the general formula

   (NH₄PO₃)ₙ

   wherein n is higher than 50, and having the following properties:
   - solubility in water lower than 2g/100 g of water
   - phosphorous content of 30-30.5 %;
   - nitrogen content of 15.9%;
   - particle size distribution: 98 % with a diameter smaller than 75 micrometres, and 2 % with a diameter of between 75 and 250 micrometres, to give flame-resistant properties, classifiable at least in group V2, according to the UL-94 V method; and
D) possibly, an anti-dripping agent.

The composition of the present invention includes from 95 to 50, preferably from 90 to 70, parts by weight of a styrene polymer and from 5 to 50, preferably from 10 to 30, parts by weight of a poly(phenylene ether), with respect to 100 parts of the mixture A) and B).

In the synergetic mixture, the weight ratio between the two components (i) and (ii) can vary within a wide range depending on the desired properties. For example, if weight ratios red phosphorous (i)/inorganic compound (ii) higher than 10 are used, the resulting compositions have excellent flame-resistant properties but a limited processability and poor mechanical characteristics; viceversa, if weight ratios, as defined above, lower than 0.1 are used, in order to have acceptable flame-resistant characteristics, high quantities of the compound containing phosphorous and nitrogen are necessary, with a consequent decrease in the physical-mechanical properties of the resulting compositions.

In practice, satisfactory results are obtained with weight ratios red phosphorous (i)/compound containing phosphorous and nitrogen (ii) ranging from 1:5 to 5:1, preferably from 1:2 to 2:1.

The quantities of synergetic mixture (i) and (ii) to be added are those necessary for obtaining a flame-resistant effect which can be classified in at least group V2, according to the UL-94 V method.

These quantities are generally in proportion to those of poly(phenylene ether) (B), in that the quantity of synergetic mixture (C) is inversely proportional to that of the poly(phenylene ether). Generally, quantities of synergetic mixture ranging from 5 to 20 parts by weight, with respect to 100 parts by weight of the mixture A and B, can be used.

The quantity of anti-dripping agent, when present, is generally very small compared to that of the other components A, B and C. Quantities of anti-dripping agent of 0.05 to 1 part, for 100 parts of A+B, can be used.

According to the present invention, a preferred flame-retardant thermoplastic composition with good flow properties, a satisfactory operating stability, even at high temperatures, and without the formation of toxic combustion products, includes:
A) from 50 to 95% by weight, based on A+B, preferably from 70 to 90%, of a styrene polymer;
B) from 50 to 5% by weight, based on A+B, preferably from 30 to 10%, of a poly(phenylene ether);
C) from 5 to 20 parts by weight, with respect to 100 parts by weight of A+B, of a synergetic mixture containing (i) red phosphorous and (ii) a compound containing phosphorous and nitrogen, wherein the weight ratio between the two constituents (i) and (ii) ranges from 10 to 0.1, preferably from 1:2 to 2:1; and
D) possibly, from 0.05 to 1 part by weight, with respect to 100 parts by weight of A+B, of an anti-dripping agent.

The term "styrene polymer" (A), as used in the present description and claims, refers to a solid, thermoplastic polymer, and relative copolymer, composed entirely or mainly, i.e. containing a chemically bound quantity of at least 50% by weight, of one or more styrene or vinylaromatic monomers having the general formula: 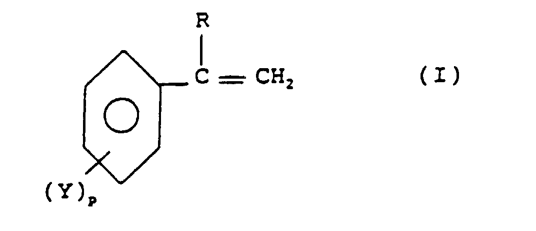 wherein R represents hydrogen or an alkyl radical having from 1 to 4 carbon atoms; p is zero or an integer from 1 to 5 and Y represents a halogen or an alkyl radical having from 1 to 4 carbon atoms.

Examples of styrene or vinylaromatic compounds having the above general formula are: styrene; methyl-styrene; mono-, di-, tri-, tetra- and penta-chloro-styrene and the corresponding alpha-methyl-styrenes; styrenes alkylated in the nucleus and the corresponding alpha-methyl-styrenes such as ortho and para-methyl-styrenes, ortho and para-ethyl-styrenes; ortho- and para-methyl-alpha-methyl-styrenes, etc.

These monomers can be used alone or mixed with each other or with other copolymerizable ethylenically unsaturated co-monomers such as, for example, maleic anhydride, acrylonitrile, methacrylonitrile, C₁-C₄ alkyl esters of acrylic or methacrylic acid etc., in quantities of up to 50% by weight.

The term styrene polymers also includes the above polymers and copolymers modified with rubber to form impact resistant polymers.

The rubber can be either natural or synthetic such as polybutadiene, polybutadiene with high or medium cis and low viscosity, polyisoprene, copolymers of butadiene and/or isoprene with styrene or with other monomers, ethylene-propylene, ethylene-propylene-diene (EPDM), styrene-conjugated diene monomer linear block rubbers of the B/S or S-B/S type, wherein S are polymeric blocks based on a styrene monomer and B/S are random and/or tapered copolymer blocks of styrene monomer and a conjugated diene, having a styrene monomer content of 20 to 60% by weight and, in relation to this, from 80 to 40% by weight of units of a conjugated diene. Rubbers with vinylaromatic monomer-conjugated diene radial blocks of the (S-S/B)ᵣ-X-(B/S)ₘ type, wherein S and S/B have the above meanings, X is a radical deriving from a polyfunctional coupling agent and m and r are integers whose sum is equal to the functionality degree of the radical X, can also be used to make styrene polymers impact resistant.

Examples of polyfunctional coupling agents are polyepoxides, epoxidated soybean seed oil, polyesters, polyhalides such as silicon tetrachloride, polyisocyanates, poly-imines, polyaldehydes, polyketones, poly-vinylaromatic compounds etc. These radial block rubbers are described, for example in German Patent 1.959.922, U.S. Patents 4.086.258 and 4.167.745 and European Patent 153.727.

The rubber component is present in the impact resistant styrene polymer in quantities of 5 to 20% by weight and can be of one single type or a mixture of different rubbers.

Impact resistant polystyrene with a mixture of rubbers composed of 90-99% by weight of polybutadiene and 10-1% by weight of a block polymer of the types mentioned above, can be used.

The preparation of the styrene polymer can be carried out according to any of the known polymerization processes in suspension, bulk-suspension or continuous bulk.

The poly(phenylene ether) (B) used in the compositions of the present invention is a well-known group of polymers. They are widely used in industry, especially as engineering polymers, in applications requiring impact strength and thermal resistance.

These poly(phenylene ether) are polymers and copolymers which include several structural units having the formula: 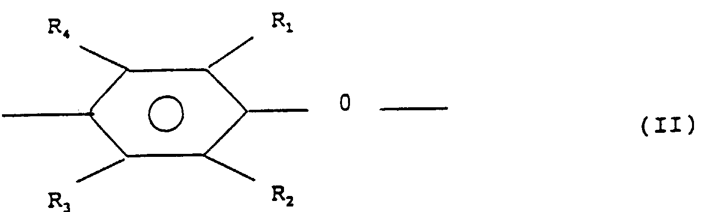 wherein R₁, R₂, R₃ and R₄ represent, independently of each other, a substituted or non-substituted hydrocarbon radical, a halogen atom or hydrogen.

Examples of R₁, R₂, R₃ and R₄ are hydrogen, halogen such as chlorine, bromine or fluorine, a hydrocarbon radical containing from 1 to 13 carbon atoms such as an alkyl radical or a substituted alkyl radical, such as methyl, ethyl, n.- and iso-propyl, primary, sec.- and ter.-butyl, n.amyl, n.hexyl, 2,3-dimethylbutyl, chloro-ethyl, hydroxy-ethyl, phenyl-ethyl, hydroxy-methyl, carboxy-ethyl, methoxycarbonyl-ethyl, cyano-ethyl; an aryl or substituted aryl radicals such as phenyl, chloro-phenyl, methyl-phenyl, di-methyl-phenyl, ethyl-phenyl; a benzyl radical or an allyl radical.

These polymers and the processes for their preparation are widely described in literature. For example, we can cite U.S. Patents 3.226.361, 3.234.183, 3.306.874, 3.306.875, 3.257.357, 3.257.358, 3.337.501 and 3.787.361.

Preferred poly(phenylene ether)s in the present invention are those with the formula: 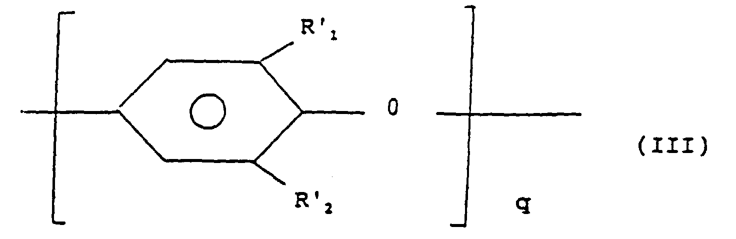 wherein R'₁ R'₂ independently of each other, are an alkyl radical containing from 1 to 4 carbon atoms and q is at least 50 and preferably between 60 and about 600.

Illustrative examples of poly(phenylene ether)s particularly suitable for the compositions of the present invention are:
- poly (2,6-di-methyl-1,4-phenylene ether);
- poly (2,6-di-ethyl-1,4-phenylene ether);
- poly (2-methyl-6-ethyl-1,4-phenylene ether);
- poly (2,6-di-propyl-1,4-phenylene ether);
- poly (2-ethyl-6-propyl-1,4-phenylene ether); the most preferred is poly(2,6-di-methyl-1,4 phenylene ether).

The term poly(phenylene ether), as used in the present description and claims, includes both homopolymers and copolymers containing the structural units of formula (II) above, such as for example copolymers including units deriving from 2,6-di-methylphenol and 2,3,6 tri-methylphenol; and also graft copolymers obtained by grafting onto the poly(phenylene ether) chain, one or more vinyl monomers such as acrylonitrile or vinylaromatic compounds such as styrene or polymers such as polystyrene or elastomers.

Poly(phenylene ether)s generally have a number average molecular weight (determined by means of Gel Permeation Chromatography) of between 5,000 and 120,000 and their intrinsic viscosity is higher than 0.1 dl/g and very often ranges from 0.30 to 0.90 dl/g, measured in chloroform at 23°C.

Any kind of red phosphorous which is commercially available may be used in the synergetic mixture (C) of the present composition.

Red phosphorous micro-encapsulated with a thermosetting resin or with an inorganic material is preferable for safety reasons.

Representative examples of thermo-setting resins are phenolic resins, epoxy resins and divinylbenzene-styrene copolymers. Representative examples of inorganic materials are titanium dioxide and silicated compounds.

One type of red phosphorous having the above characteristics is known on the market under the trade-name of AMGARD CRP produced and sold by ALBRIGHT & WILSON LTD. - West Midlands - G.B., having average dimensions of between 20 and 30 micrometres.

The inorganic compound containing nitrogen and phosphorous (ii) can be selected from ammonium polyphosphates having the general formula:

(NH₄)ₙ₊₂ Pₙ O₃ₙ₊₁ (IV)

wherein n is an integer either equal to or higher than 2; the molecular weight of the compounds having formula (IV) is preferably sufficiently high as to guarantee a low solubility in water.

The composition of polyphosphates having formula (IV) above wherein n is a sufficiently high number, is practically that which corresponds to the formula of methaphosphates (NH₄PO₃)ₙ.

These polyphosphates are available on the market under the trade-name of EXOLIT^{R} 263 or 422, a product which is produced and sold by Benckiser Knapsack G.m.b.H; PHOS-CHECK P 30^{R}, produced and sold by Monsanto Chem.; AMGARD MC^{R}, produced and sold by Albright & Wilson Ltd. All these commercial compounds correspond to the formula (NH₄PO₃)ₙ wherein n is higher than 50 and have a solubility in water lower than 2 g/100 g of water, a phosphorous content of 30-30.5% and a nitrogen content of 15.9% and the following particle size distribution:
- 98% with a diameter lower than 75 micrometres;
- 2% with a diameter of between 75 and 250 micrometres.

Any known anti-dripping agent can be used in the flame-resistant thermoplastic compositions of the present invention.

A preferred anti-dripping agent is polytetrafluoroethylene (PTFE) particularly in very fine powder form having particle dimensions lower than 20 micrometres and preferably from 5 to 0.1 micrometres. This polymer (PTFE) can be obtained by a disprsion polymerization process with the tetrafluoroethylene, in the presence of organic and inorganic peroxidic catalysts, at pressures ranging from 10 to 200 Atm and at temperatures ranging from 0 to 200°C.

Examples of PTFE known on the market are: those produced by E.I. Du Pont de Nemours and Company and sold under the trade-name of TEFLON^{R}; those produced by Montefluos under the trade-name of ALGOFLON^{R}; those produced by I.C.I. under the trade-name of FLUON^{R} etc.

These products can be homopolymers or copolymers of PTFE copolymerizable with another monomer wherein the PTFE is present as the main constituent of the copolymer, preferably at least at a level of 80% by weight.

The mixtures of the present invention can be prepared in accordance with any of the conventional mixing methods.

The mixing is generally carried out in the molten state, in known apparatus, such as single and twin-screw extruders, Banbury mixer, mixing rolls etc. at temperatures of between 220 and 260°C.

The components of the composition can be pre-mixed at room temperature or added separately or combined with each other during the extrusion process.

The compositions may also contain stabilizing agents, anti-acids and/or other thoroughly incorporated additives, such as plasticizers, lubricants, flow agents, antistatic agents, dyes, pigments, glass fibres or other inorganic charges, etc. to give special characteristics to the material.

The compositions of the present invention may also contain triphenylphosphate, known on the market under the trade-name of REOMOL^{R}, produced and sold by CIBA-GEIGY, to give better process and luster properties. The quantity of triphenylphosphate to be added varies from 1 to 20 parts by weight for 100 parts by weight of components A and 3.

The mixtures of the present invention are easily processable, especially by means of injection moulding, and have a combination of properties which make them suitable for use in the preparation of articles having good mechanical characteristics and excellent flame retardant properties. These mixtures are consequently applied in the fields of electronics and technical articles which come in contact with heat and/or electrical voltage.

The examples which follow are intended to provide a better illustration of the present invention but do not limit it.

In the examples, all parts and percentages are given by weight, if not differently indicated. Examples 1-3 are comparative examples.

### EXAMPLES 1-10

The following products were mixed, at room temperature in a rotating mixer:
- impact resistant polystyrene containing 7.5% by weight of polybudatienic rubber and having a molecular weight of 170,000, in the quantities shown in Table I;
- poly(2,6-di-methyl-1,4-phenylene ether) (PPE) having an intrinsic viscosity of 0.47 dl/g in chloroform at 23°C, in the quantities shown in Table I;
- red phosphorous, produced and sold by Albright & Wilson Ltd. under the trade-name of AMGARD^{R} CRP, in the quantities shown in Table I;
- ammonium polyphosphate, produced and sold by Albright & Wilson Ltd. under the trade-name of AMGARD^{R} MC, in the quantities shown in Table I;
- triphenylphosphate, produced and sold by Ciba Geigy under the trade-name of REOMOL^{R}, in the quantities shown in Table I; and
- PTFE, produced and sold by Montefluos under the trade-name of ALGOFLON^{R}, in the quantities shown in Table I.

The mixtures thus obtained were dried at 80°C for 4 hours and extruded by means of a BANDERA TR45 single-screw extruder, with a ratio length/diameter of 25, with degassing, at a temperature of 240°C.

By cutting the strips at the exit of the extruder, pellets were obtained which were dried for 4 hours at 80°C.

To determine their characteristics, the pellets were injection moulded at a temperature of 220-240°C on a NEGRI & BOSSI V-17-110 FA press to obtain test samples with dimensions required by the regulations.

The properties of the test samples thus obtained are shown in Table I below.

The following methods were used for measuring the characteristics of the mixtures of the present invention.

### Flame-resistant properties

The inflammability was determined according to the "Underwriters' Laboratory" method called UL-94 V described in "Standard For Tests for Flammability of Plastic Materials For Parts in Devices and Appliances" 3 Edition, January 28, 1980, on test samples having dimensions 127x12.7x1.59 mm (5"x0.5"x0.0625").

The oxygen index (LOI) was also determined according to ASTM D 2863.

### Mechanical properties

The IZOD resilience with notch was determined at 23°C, according to ASTM D256, on test samples having a thickness of 3.2 mm.

### Thermal properties

The VICAT B softening temperature (5 kg in oil) was determined, according to ISO 306, with an increase in temperature of 50°C/hour.

### Rheological properties

The Melt-Index (M.F.I.) was determined according to ASTM D 1238, at 260°C and 5 kg.

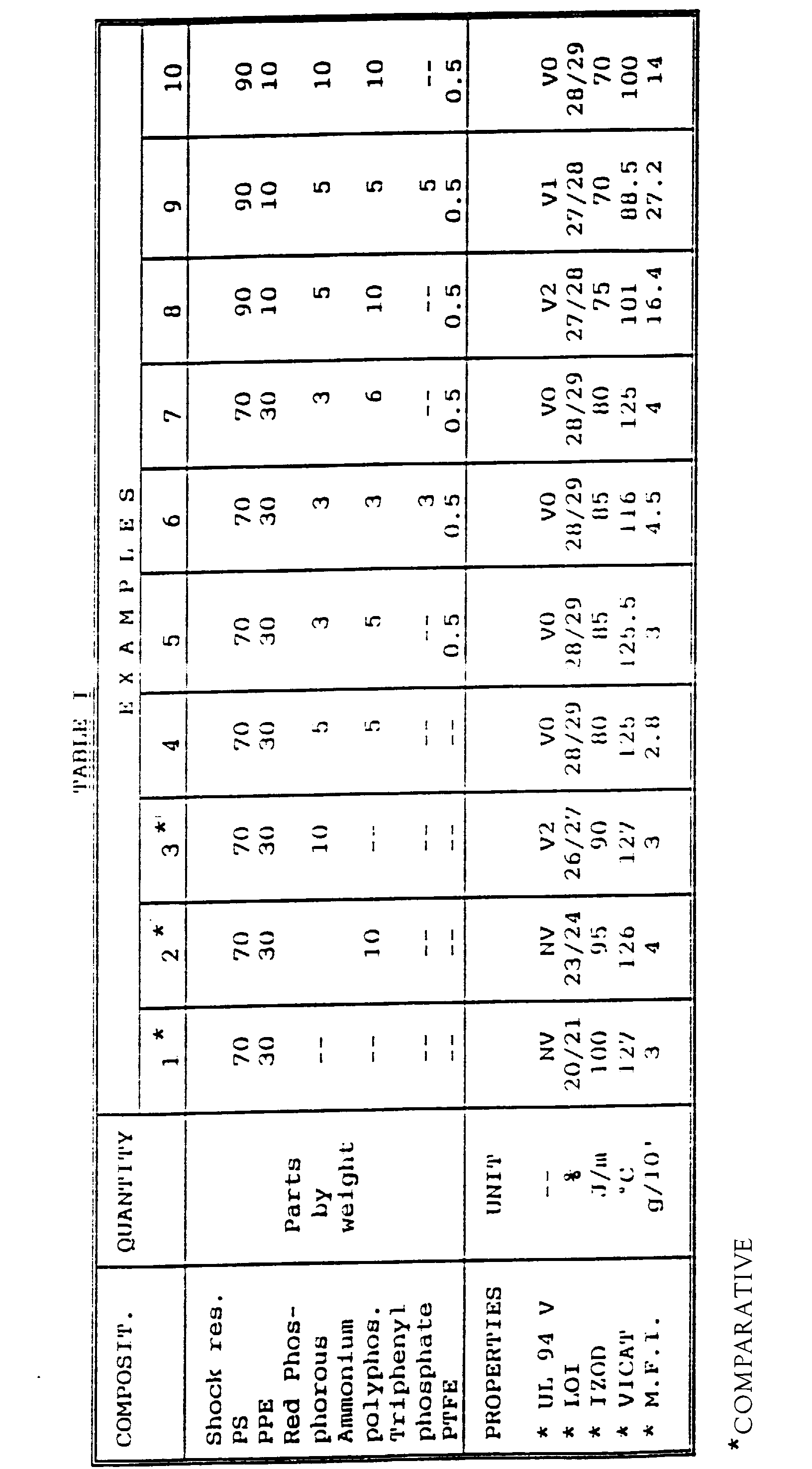

## Claims

1. Flame-retardant thermoplastic composition including:
A) a styrene polymer;
B) a poly(phenylene ether);
C) a sufficient quantity ranging from 5 to 20 parts by weight with respect to 100 parts of the mixture A) and B), to give flame-resistant properties, classifiable under at least group V2, according to UL-94 V method, of a synergic mixture including i) red phosphorous and ii) an inorganic compound selected from an ammonium polyphosphate of formula
(NH₄)ₙ₊₂ Pₙ O₃ₙ₊₁ (IV)
wherein n is an integer equal or higher than 2, or an ammonium polyphosphate having the general formula
(NH₄PO₃)ₙ
wherein n is higher than 50, and having the following properties:
- solubility in water lower than 2g/100 g of water;
- phosphorous content of 30-30.5%;
- nitrogen content of 15.9%;
- particle size distribution: 98 % with a diameter smaller than 75 micrometres, and 2 % with a diameter of between 75 and 250 micrometres;
and
D) possibly, an anti-dripping agent.

2. Thermoplastic composition according to Claim 1, wherein the quantity of styrene polymer ranges from 95 to 50, preferably from 90 to 70 parts by weight, and, in relation to this, that of the poly poly(phenylene ether) from 5 to 50, preferably from 10 to 30 parts by weight, with respect to 100 parts by weight of the mixture of A) and B).

3. Thermoplastic composition according to Claims 1 or 2, wherein the weight ratio red phosphorous (i)/inorganic compound (ii) is between 10 and 0.1.

4. Thermoplastic composition according to any of the previous Claims, wherein the weight ratio red phosphorous (i)/inorganic compound (ii) ranges from 1:5 to 5:1, preferably from 1:2 to 2:1.

5. Thermoplastic composition according to any of the previous Claims, wherein the quantity of anti-dripping agent ranges from 0.05 to 1 part by weight for 100 parts by weight of A+B.

6. Thermoplastic composition according to any of the previous Claims including:
A) from 50 to 95% by weight, preferably from 70 to 90%, of a styrene polymer, with respect to 100 parts by weight of the mixture of A) and B);
B) from 50 to 5% by weight, preferably from 30 to 10%, of a poly(phenylene ether), with respect to 100 parts by weight of the mixture of A) and B);
C) from 5 to 20 parts by weight, with respect to 100 parts by weight of A+B, of a synergetic mixture containing (i) red phosphorous and (ii) an inorganic compound selected from an ammonium polyphosphate of formula
(NH₄)ₙ₊₂ Pₙ O₃ₙ₊₁ (IV)
wherein n is an integer equal or higher than 2, or an ammonium polyphosphate having the general formula
(NH₄PO₃)ₙ
wherein n is higher than 50, and having the following properties:
- solubility in water lower than 2g/100 g of water;
- phosphorous content of 30-30.5%;
- nitrogen content of 15.9%;
- particle size distribution: 98 % with a diameter smaller than 75 micrometres, and 2 % with a diameter of between 75 and 250 micrometres, wherein the weight ratio between the two constituents (i) and (ii) is between 10 and 0.1, preferably between 1:2 and 2:1; and
D) possibly, from 0.05 to 1 part by weight, with respect to 100 parts by weight of A+B, of an antidripping agent.

7. Thermoplastic composition according to any of the previous Claims, wherein the styrene polymer contains, chemically linked, at least 50% by weight of one or more styrene or vinylaromatic monomers having the general 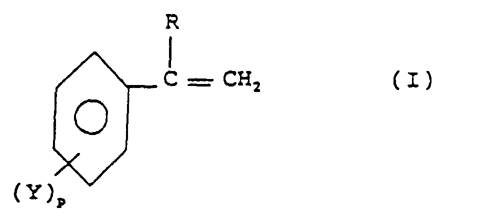 wherein R represents hydrogen or an alkyl radical having from 1 to 4 carbon atoms; p is zero or an integer from 1 to 5 and Y represents a halogen or an alkyl radical having from 1 to 4 carbon atoms.

8. Thermoplastic composition according to Claim 7, wherein the styrene polymer contains up to 50% by weight of a copolymerizable ethylenically unsaturated co-monomer such as maleic anhydride, acrylonitrile, methacrylonitrile, C₁-C₄ alkyl esters of acrylic or methacrylic acid.

9. Thermoplastic composition according to any of the previous Claims, wherein the styrene polymer is made shock-resistant with 5-20% by weight of a rubber selected from: polybutadiene; polyisopropene; copolymers of butadiene and/or of isoprene with styrene or with other monomers; ethylene-propylene; ethylene-propylene-diene (EPDM); styrene monomer-conjugated diene linear block rubbers of the B/S or S-B/S type, wherein S are polymeric blocks based on styrene monomer and B/S are random and/or tapered copolymer blocks of styrene monomer and a conjugated diene, having a content of styrene monomer of 20 to 60% by weight and, in relation to this, from 80 to 40% by weight of units of a conjugated diene; rubbers with radial blocks vinylaromatic monomer-conjugated diene of the (S-S/B)ᵣ - X -(B/S)ₘ type wherein S and S/B have the meanings defined above, X is a radical deriving from a polyfunctional coupling agent and m and r are integers whose sum is equal to the functionality degree of the radical X, and their mixtures.

10. Thermoplastic composition according to any of the previous Claims, wherein the styrene polymer is polystyrene made shock-resistant by means of a mixture of rubbers composed of 90-99% by weight of polybutadiene and 10-1% by weight of a block rubber as described in Claim 10.

11. Thermoplastic composition according to any of the previous Claims, wherein the poly(phenylene)ether is a polymer or copolymer containing several structural units having the formula: 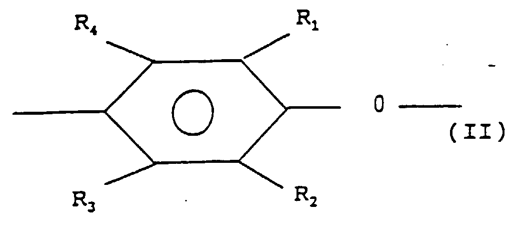 wherein R₁, R₂, R₃ and R₄ represent, independently of each other, a substituted and non-substituted hydrocarbon radical, a halogen atom or hydrogen.

12. Thermoplastic composition according to Claim 11, wherein the poly(phenylene)ether is poly(2,6-di-methyl-1,4-phenylene)ether.

13. Thermoplastic composition according to any of the previous Claims, wherein the red phosphorous (i) is micro-encapsulated with a thermo-setting resin or with an inorganic material.

14. Thermoplastic composition according to any of the previous Claims, wherein the anti-dripping agent is polytetrafluoroethylene (PTFE) having a particle size lower than 20 micrometres, preferably between 5 and O.1 micrometres.

15. Thermoplastic composition according to any of the previous Claims, containing additionally triphenylphosphate in quantities ranging from 1 to 20 parts by weight per 100 parts by weight of A+B.

16. Thermoplastic composition according to any of the previous Claims, containing in addition stabilizers, anti-acid agents, plasticizers, lubricants, flow agents, antistatic agents, pigments, glass fibres and/or other inorganic charges.

## Patentansprüche

1. Flammhemmende thermoplastische Zusammensetzung, beinhaltend:
A) ein Styrolpolymer;
B) einen Poly(phenylenether);
C) eine ausreichende Menge in einem Bereich von 5 - 20 Gewichtsteile, bezogen auf 100 Teile der Mischung aus A) und B), zum Erhalt flammbeständiger Eigenschaften, klassifizierbar wenigstens unter Gruppe V2, entsprechend der UL-94 V-Methode, einer synergetischen Mischung, beinhaltend
i) roten Phosphor und
ii) eine anorganische Verbindung, ausgewählt aus einem Ammoniumpolyphosphat der Formel
(NH₄)ₙ₊₂PₙO₃ₙ₊₁ (IV)
wobei n eine ganze Zahl gleich oder größer als 2 ist,
oder aus einem Ammoniumpolyphosphat, welches die allgemeine Formel
(NH₄PO₃)ₙ
aufweist, wobei n größer als 50 ist, und
die folgenden Eigenschaften aufweist:
- Löslichkeit in Wasser niedriger als 2/g 100 g Wasser;
- Phosphorgehalt von 30 - 30,5%;
- Stickstoffgehalt von 15,9%;
- Teilchengrößenverteilung: 98% mit einem Durchmesser kleiner als 75 Mikrometer und 2% mit einem Durchmesser zwischen 75 und 250 Mikrometer;
und
D) gegebenenfalls ein tropfenverhinderndes Agens.

2. Thermoplastische Zusammensetzung nach Anspruch 1, wobei die Menge des Styrolpolymers 95 bis 50, bevorzugt 90 - 70 Gewichtsteile, und in bezug auf dieses die Menge des Poly(phenylenethers) 5 - 50, bevorzugt 10 - 30 Gewichtsteile, beträgt, jeweils bezogen auf 100 Gewichtsteile der Mischung aus A) und B).

3. Thermoplastische Zusammensetzung nach Anspruch 1 oder 2, wobei das Gewichtsverhältnis roter Phosphor (i)/anorganische Verbindung (ii) zwischen 10 und 0,1 beträgt.

4. Thermoplastische Zusammensetzung nach einem der vorhergehenden Ansprüche, wobei das Gewichtsverhältnis roter Phosphor (i)/anorganische Verbindung (ii) 1:5 bis 5:1, bevorzugt 1:2 bis 2:1, beträgt.

5. Thermoplastische Zusammensetzung nach einem der vorhergehenden Ansprüche, wobei die Menge des tropfenverhindernden Agens 0,05 bis 1 Gewichtsteil beträgt, bezogen auf 100 Gewichtsteile von A) und B).

6. Thermoplastische Zusammensetzung nach einem der vorhergehenden Ansprüche, beinhaltend:
A) 50 bis 95 Gew.%, bevorzugt 70 - 90 Gew.%, eines Styrolpolymers, bezogen auf 100 Gewichtsteile der Mischung aus A) und B);
B) 50 bis 5 Gew.%, bevorzugt 30 - 10 Gew.%, eines Poly(phenylenethers), bezogen auf 100 Gewichtsteile der Mischung aus A) und B);
C) 5 bis 20 Gewichtsteile, bezogen auf 100 Gewichtsteile von A) und B), einer synergetischen Mischung, beinhaltend
(i) roten Phosphor und
(ii)eine anorganische Verbindung, ausgewählt aus einem Ammoniumpolyphosphat der Formel
(NH₄)ₙ₊₂PₙO₃ₙ₊₁ (IV)
wobei n eine ganze Zahl gleich oder größer als 2 ist,
oder aus einem Ammoniumpolyphosphat, welches die allgemeine Formel
(NH₄PO₃)ₙ
aufweist, wobei n größer als 50 ist, und die folgenden Eigenschaften aufweist;
- Löslichkeit in Wasser niedriger als 2/g 100g Wasser;
- Phosphorgehalt von 30 - 30,5%;
- Stickstoffgehalt von 15,9%;
- Teilchengrößenverteilung: 98% mit einem Durchmesser kleiner als 75 Mikrometer und 2% mit einem Durchmesser zwischen 75 und 250 Mikrometer,
wobei das Gewichtsverhältnis zwischen den beiden Verbindungen (i) und (ii) zwischen 10 und 0,1, bevorzugt zwischen 1:2 und 2:1 beträgt;
und
D) gegebenenfalls 0,05 bis 1 Gewichtsteil, bezogen auf 100 Gewichtsteile von A) und B), eines tropfenverhindernden Agens.

7. Thermoplastische Zusammensetzung nach einem der vorhergehenden Ansprüche, wobei das Styrolpolymer chemisch gebunden wenigstens 50 Gew.% eines oder mehrerer Styrol- oder vinylaromatischer Monomeren mit der allgemeinen Formel 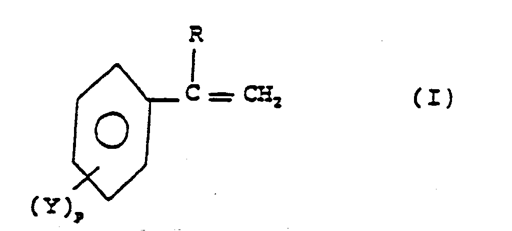 beinhaltet, wobei R Wasserstoff oder ein Alkylradikal bedeutet, welches 1 bis 4 Kohlenstoffatome aufweist; p Null oder eine ganze Zahl von 1 bis 5 ist, und Y für ein Halogen- oder ein Alkylradikal steht, welches 1 bis 4 Kohlenstoffatome aufweist.

8. Thermoplastische Zusammensetzung nach Anspruch 7, wobei das Styrolpolymer bis zu 50 Gew.% eines copolymerisierbaren ethylenisch ungesättigten Comonomeren, wie Maleinsäureanhydrid, Acrylonitril, Methacrylnitril, C₁-C₄-Alkylester einer acrylischen oder methacrylischen Säure enthält.

9. Thermoplastische Zusammensetzung nach einem der vorhergehenden Ansprüche, wobei das Styrolpolymer schlagwiderstandsfähig gemacht wird mit 5 - 20 Gew.% eines Gummis, ausgewählt aus Polybutadien; Polyisopren; Copolymeren von Butadien und/oder Isopren mit Styrol oder mit anderen Monomeren, Ethylen-Propylen; Ethylen-Propylen-Dien (EPDM); Styrolmonomer-konjungiertem Dien-Linearblock-Gummi des B/S oder S-B/S-Typs, wobei S Polymerblöcke, basierend auf Styrolmonomer, und B/S Random- und/oder verjüngte Copolymer-Blöcke aus Styrolmonomer und einem konjungierten Dien bedeutet, welche einen Styrolmonomergehalt von 20 bis 60 Gew.% und, in bezug auf dieses, von 80 bis 40 Gew.% Einheiten eines konjungierten Diens aufweisen; Gummi mit vinylaromatischen Monomer-konjungierten Dien-Radialblöcken des (S-S/B)ᵣ-X-(B/S)ₘ-Typs, wobei S und S/B die oben definierte Bedeutung haben, X ein Radikal aus einem polyfunktionellen Kopplungsagens ist und m und r ganze Zahlen sind, deren Summe gleich dem Funktionalitätsgrad des Radikals X ist; und deren Mischungen.

10. Thermoplastische Zusammensetzung nach einem der vorhergehenden Ansprüche, wobei das Styrolpolymer ein mittels einer Mischung eines Gummis, hergestellt aus 90 - 99 Gew.% Polybutadien und 10 - 1 Gew.% eines Blockgummis, entsprechend Anspruch 9, schlagwiderstandsfähig gemachtes Polystyrol ist.

11. Thermoplastische Zusammensetzung nach einem der vorhergehenden Ansprüche, wobei der Poly(phenylenether) ein Polymer oder Copolymer ist, welches mehrere strukturelle Einheiten der Formel 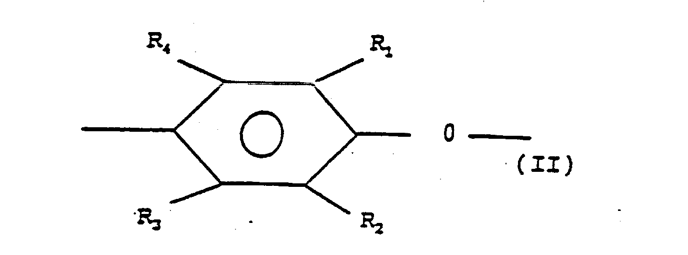 aufweist, wobei R₁, R₂, R₃ und R₄ jeweils unabhängig voneinander ein substituiertes und nichtsubstituiertes Kohlenwasserstoffradikal, ein Halogenatom oder Wasserstoff bedeuten.

12. Thermoplastische Zusammensetzung nach Anspruch 11, wobei der Poly(phenylenether) Poly(2,6-di-methyl-1,4-phenylen-ether) ist.

13. Thermoplastische Zusammensetzung nach einem der vorhergehenden Ansprüche, wobei der rote Phosphor (i) mit einem wärmehärtbaren Harz oder einem anorganischen Material mikroverkapselt ist.

14. Thermoplastische Zusammensetzung nach einem der vorhergehenden Ansprüche, wobei das tropfenverhindernde Agens Polytetrafluorethylen (PTFE) ist, welches eine Partikelgröße kleiner als 20 Mikrometer, bevorzugt zwischen 5 und 0,1 Mikrometer, aufweist.

15. Thermoplastische Zusammensetzung nach einem der vorhergehenden Ansprüche, beinhaltend zusätzlich Triphenylphosphat in Mengen von 1 bis 20 Gewichtsteilen, bezogen auf 100 Gewichtsteile von A) und B).

16. Thermoplastische Zusammensetzung nach einem der vorhergehenden Ansprüche, beinhaltend zusätzlich Stabilisatoren, Antisäureagenzien, Plastifizierer, Gleitmittel, Flußmittel, Antistatika, Pigmente, Glasfasern und/oder andere anorganische Materialien.

## Revendications

1. Composition thermoplastique retardatrice de flamme, comportant :
A) un polymère styrène ;
B) un poly(phénylène éther) ;
C) une quantité suffisante, comprise entre 5 à 20 parties en poids par rapport à 100 parties du mélange de A) et B), afin de donner des propriétés ignifuges, classable au moins dans le groupe V2, selon le procédé UL-94 V, d'un mélange synergique comportant i) du phosphore rouge et ii) un composé inorganique choisi à partir d'un polyphosphate d'ammonium de formule
(NH₄)ₙ₊₂ PₙO₃ₙ₊₁ (IV)
dans laquelle n est un nombre entier supérieur ou égal à 2, ou un polyphosphate d'ammonium ayant la formule générale suivante
(NH₄PO₃)ₙ
où n est supérieur à 50, et possède les propriétés suivantes :
- solubilité dans l'eau inférieure à 2/ 100g d'eau ;
- teneur en phosphore de 30 à 30,5 % ;
- teneur en azote de 15,9 % ;
- granulométrie : 98 % avec un diamètre inférieur à 75 micromètres, et 2 % avec un diamètre compris entre 75 et 250 micromètres ; et
D) éventuellement un agent anti-gouttes.

2. Composition thermoplastique selon la revendication 1, dans laquelle la quantité de polymère styrène est comprise entre 95 et 50, de préférence entre 90 et 70, parties en poids, et, en rapport avec ceci, celle de poly(phénylène éther) entre 5 et 50, de préférence entre 10 et 30, parties en poids, par rapport à 100 parties en poids du mélange de A) et B).

3. Composition thermoplastique selon la revendication 1 ou 2, dans laquelle le rapport en poids phosphore rouge (i)/composé inorganique (ii) est compris entre 10 et 0,1.

4. Composition thermoplastique selon l'une quelconque des revendications précédentes, dans laquelle le rapport en poids phosphore rouge (i)/composé inorganique (ii) est compris entre 1/5 et 5/1, de préférence, entre 1/2 et 2/1.

5. Composition thermoplastique selon l'une quelconque des revendications précédentes, dans laquelle la quantité d'agent anti-gouttes est comprise entre 0,05 et 1 partie en poids pour 100 parties en poids de A + B.

6. Composition thermoplastique selon l'une quelconque des revendications précédentes comprenant :
A) de 50 à 95 % en poids, de préférence de 70 à 90 %, d'un polymère styrène, par rapport à 100 parties en poids du mélange de A) et B);
B) de 50 à 5 % en poids, de préférence de 30 à 10 %, d'un poly(phénylène éther), par rapport à 100 parties en poids du mélange de A) et B);
C) de 5 à 20 parties en poids, par rapport à 100 parties en poids de A + B, d'un mélange synergique contenant (i) du phosphore rouge et (ii) un composé inorganique choisi à partir d'un polyphosphate d'ammonium de formule
(NH₄)ₙ₊₂PₙO₃ₙ₊₁ (IV)
dans laquelle n est un nombre entier supérieur ou égal à 2, ou un polyphosphate d'ammonium ayant la formule générale suivante
(NH₄PO₃)ₙ
où n est supérieur à 50, et possède les propriétés suivantes :
- solubilité dans l'eau inférieure à 2/100g d'eau ;
- teneur en phosphore de 30 à 30,5 % ;
- teneur en azote de 15,9 % ;
- granulométrie : 98 % avec un diamètre inférieur à 75 micromètres, et 2 % avec un diamètre compris entre 75 et 250 micromètres ;
dans lequel mélange le rapport en poids entre les deux constituants (i) et (ii) est compris entre 10 et 0,1, de préférence entre 1/2 et 2/1 ; et
D) éventuellement de 0,05 à 1 partie en poids, par rapport à 100 parties en poids de A + B, d'un agent anti-gouttes.

7. Composition thermoplastique selon l'une quelconque des revendications précédentes, dans laquelle le polymère styrène contient, grâce à une liaison chimique, au moins 50 % en poids d'un ou plusieurs styrènes ou monomères vinylaromatiques ou styrène de formule générale suivante : 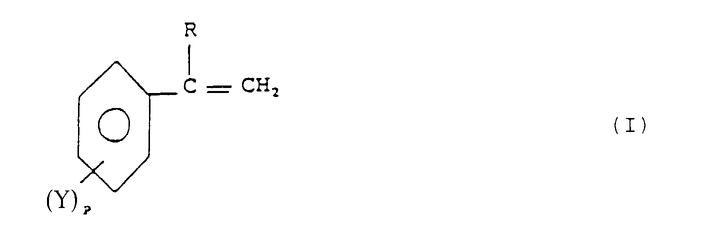 dans laquelle R représente l'hydrogène ou un radical alcoyle ayant de 1 à 4 atomes de carbone ; p est zéro ou un nombre entier entre 1 et 5, et Y représente un halogène ou un radical alcoyle ayant de 1 à 4 atomes de carbone.

8. Composition thermoplastique selon la revendication 7, dans laquelle le polymère styrène contient jusquã 50 % en poids d'un comonomère insaturé ethynéliquement copolymérisable tel que l'anhydre de l'acide maléique, le nitrile acrylique, le nitrile méthacrylique, les esters d'alcoyle ayant de 1 à 4 atomes de carbone d'acide acrylique ou méthacrylique.

9. Composition thermoplastique selon l'une quelconque des revendications précédentes, dans laquelle le polymère styrène est rendu résistant aux chocs grâce à 5 à 20 % en poids d'un caoutchouc choisi parmi le polybutadiène, le polyisopropène ; les copolymères de butadiène et/ou d'isoprène avec le styrène ou avec d'autres monomères ; l'éthylène-propylène ; l'éthylène-propylène-diène (EPDM) ; des caoutchoucs en blocs linéaires de diène conjugué monomère styrène des types B/S ou S-B/S, dans lequel S sont des blocs polymères basés sur un monomère styrène et B/S sont des blocs copolymères aléatoires et/ou diminués de monomère styrène et d'un diène conjugué, présentant une teneur en monomère styrène de 20 à 60 % en poids, et, en rapport avec ceci, entre 80 et 40 % en poids d'unités d'un diène conjugué ; des caoutchoucs en blocs radiaux de diène conjugué monomère vinylaromatique du type (S-S/B)ᵣ - X - (B/S)ₘ , dans lesquels S et S/B ont la signification définie ci-dessus, X est un radical dérivé d'un agent de combinaison polyfonctionnel, et m et r sont des nombres entiers dont la somme est égale au degré de fonctionnalité du radical X, et leurs mélanges.

10. Composition thermoplastique selon l'une quelconque des revendications précédentes, dans laquelle le polymère-styrène est un polystyrène rendu résistant aux chocs au moyen d'un mélange de caoutchoucs composé de 90 à 99 % en poids de polybutadiène, et de 10 à 1 % en poids d'un caoutchouc en blocs tel que défini à la revendication 9.

11. Composition thermoplastique selon l'une quelconque des revendications précédentes, dans laquelle le poly(phénylène)éther est un polymère ou un copolymère contenant plusieurs unités structurelles ayant la formule suivante : 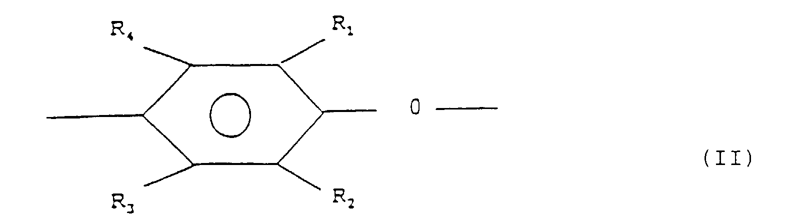 dans laquelle R₁, R₂, R₃ et R₄ représentent, indépendamment les uns des autres, un radical hydrocarbure substitué et non substitué, un atome d'halogène, ou l'hydrogène.

12. Composition thermoplastique selon la revendication 11, dans laquelle le poly(phénylène)éther est un poly(2,6-di-méthyl-1,4-phénylène)éther.

13. Composition thermoplastique selon l'une quelconque des revendications précédentes, dans laquelle le phosphore rouge (i) est micro-encapsulé dans une résine thermodurcissable ou dans un matériau inorganique.

14. Composition thermoplastique selon l'une quelconque des revendications précédentes, dans laquelle l'agent anti-gouttes est du polytétrafluoroéthylène (PTFE) possédant une granulométrie inférieure à 20 micromètres, de préférence comprise entre 0,1 et 5 micromètres.

15. Composition thermoplastique selon l'une quelconque des revendications précédentes, contenant, de plus, du triphénylphosphate en une quantité comprise entre 1 et 20 parties en poids pour 100 parties en poids de A + B.

16. Composition thermoplastique selon l'une quelconque des revendications précédentes, contenant, de plus, des stabilisants, des agents anti-acides, des plastifiants, des lubrifiants, des agents d'écoulement, des agents antistatiques, des pigments, des fibres de verre et/ou d'autres charges inorganiques.
